# EUROPÄISCHE PATENTANMELDUNG

(11) **EP 0 969 053 A1**
(43) Veröffentlichungstag der Anmeldung: **05.01.2000**
(21) Anmeldenummer: 99110036.3
(22) Anmeldetag: 22.05.1999
(51) Int. Cl.: C09D 5/03, C09D 177/00

(54) **Elektrostatische Pulverlacke auf Basis von Polyamiden und Polyolefinen**

(30) Priorität: 26.05.1998 DE 19823426
(71) Anmelder: Degussa-Hüls Aktiengesellschaft, 60287 Frankfurt am Main (DE)
(72) Erfinder: Christoph, Wolfgang, 45768 Marl (DE); Gurke, Thorsten, 3090 Overijze (BE); Burns, Bernhard, Huntingdon Valley, PA (US)

(57) **Zusammenfassung**

Es werden elektrostatisch verarbeitbare Pulverlacke auf Basis von Polyamiden mit Polyolefinen als oberflächenwirksame Substanz beschrieben.

## Beschreibung

Die Erfindung betrifft Pulverlacke auf Basis von Polyamiden und/oder Copolyamiden, mit Schmelzpunkten von > 100 °C mit Polyolefinen, vorzugsweise Polyolefinwachsen, die elektrostatisch aufgetragen werden und bei Temperaturen oberhalb des Schmelzpunktes des jeweiligen höchstschmelzenden Einsatzstoffes einen Lackfilm bilden.

In der Industrie werden üblicherweise Pulver mit Partikelgrößen < 100 µm für die elektrostatische Beschichtung von metallischen Werkstücken eingesetzt. Zur elektrostatischen Aufladung werden handelsübliche Pulverpistolen eingesetzt, die Pulver nach dem Tribo-, Corona- oder Supercoronaverfahren aufladen. Die einzelnen Partikel erhalten vorzugsweise eine negative Ladung, die dafür verantwortlich ist, daß das Pulver auf dem Metall haften bleibt. In seltenen Fällen werden spezielle Pulverpistolen eingesetzt, die eine positive Ladung erzeugen. Das beschichtete Werkstück wird anschließend im Ofen aufgeheizt, so daß das Pulver schmilzt und einen Lackfilm ausbildet. Die Einbrenntemperatur ist abhängig vom jeweilig eingesetzten Pulver, befindet sich aber üblicherweise in einem Temperaturbereich von 180 bis 220 °C.

Die elektrostatische Abscheidung von Polyamid-Pulvern ist ohne Probleme bei Raumtemperatur möglich, so daß die Pulverpartikel aufdem metallischen Untergrund haften bleiben Wahrend des Aufheizvorganges, im Temperaturbereich von ca. 40 bis 70 °C, verlieren die Polyamid-Pulver jedoch einen Teil ihres spezifischen Widerstandes, daß bedeutet, daß das Polyamid leitfähiger wird. Resultierend daraus erfolgt eine Entladung des Pulver in den metallischen Untergrund. Sehr häufig kann nun ein Abfallen des Polyamid-Pulvers vom metallischen Untergrund beobachtet werden, welches eine fehlerhafte Beschichtung verursacht. Die Entladung der Polyamid-Pulver in Abhängigkeit der Temperatur und Luftfeuchtigkeit ist in der Literatur ausführlich beschrieben.

Die Abnahme des spezifischen Widerstandes und der daraus resultierende Abfall der Pulver ist einer der Hauptgründe für den geringen Marktanteil von Polyamiden im Bereich der Pulverlacke. Aufgabe der Erfindung war deshalb die Herstellung von elektrostatischen Polyamidpulvern, die nicht die oben beschriebenen Nachteile aufweisen.

Überraschend wurde nun gemäß der Patentansprüche gefunden, daß Polyamide und/oder Copolyamide mit Schmelzpunkten > 100 °C, die mit Polyolefinen, vorzugsweise Polyolefinwachsen, versetzt sind, problemlos bei Temperaturen oberhalb des Schmelzpunktes des jeweiligen höchstschmelzenden Einsatzstoffes einen Lackfilm bilden. Als Rohstoffbasis wurden sowohl Homopolyamide, basierend auf Laurinlactam oder Aminoundecansäure, als auch Copolyamide mit Schmelzpunkten > 100 °C zusammen oder allein in Abmischung mit verschieden Polyolefinen eingesetzt. Geeignete Produkte sind sowohl Polyethylenwachse, Fischer-Tropsch-Wachse als auch deren Oxidate, sowie Polypropylen und Polybutylen, die sowohl einzeln als auch in Kombination eingesetzt werden können. Die eingesetzten Polyolefine sollten Schmelzpunkte von 80 bis 170 °C aufweisen. Die Polyolefine werden in Mengen von 0,25 bis 10 Teilen, vorzugsweise 0,5 bis 10 Teilen, bezogen auf 100 Teile Polyamid und/oder Copolyamid, beim Dry-Blend-Verfahren vorzugsweise in Mengen von 0,5 bis 5 Teilen und beim Extrusionsverfahren vorzugsweise in Mengen von 1 bis 10 Teilen, bezogen auf 100 Teile Polyamid und/oder Copolyamid, eingesetzt. Die olefinischen Produkte sollten eine ausreichende Kristallinität aufweisen, um eine Produktagglomeration zu verhindern.

Die Herstellung von Pulvern dieser Art in der geforderten Kornverteilung von < 100 µm ist in der Literatur vielfältig beschrieben, beispielhaft erwähnt sei die Kaltvermahlung und der Fällungsprozeß. Pulver beider Verfahren wurden für die Beispiele eingesetzt.

Es existieren verschiedene Methoden Additive einem Polymeren zuzufügen. Folgende Möglichkeiten sind beispielhaft:
- die Mischung von Pulvern im Dry-Blend-Verfahren,
- die Mischung von Pulvern und/oder Granulaten im Dry-Blend-Verfahren und anschließender Extrusion und Vermahlung.

### Beispiele:

In einer ersten Versuchsreihe wurde ein Feinpulver basierend auf einem ungeregelten Polyamid-12 mit einer relativen Lösungsviskosität von ca. 1,6, gemessen in m-Kresol, mit verschiedenen Konzentrationen eines fein pulverisierten Fischer-Tropsch-Wachs mit einem Schmelzpunkt von ca. 110 °C (Polyolefin 1), im Dry-Blend-Verfahren gemischt. Die Mischtemperatur betrug zwischen Raumtemperatur und 100 °C. Die Mischtemperatur lag deutlich unterhalb des Schmelzpunktes der Einsatzstoffe um zu garantieren, daß das Fischer-Tropsch-Wachs als oberflächenaktives Additiv vorliegt. Die Mischzeit betrug 15 min bei 1 000 U/min um eine homogene Verteilung zu gewährleisten. Eine Verschiebung der Kornverteilung konnte nicht beobachtet werden.

**Tabelle 1**

| Versuch | 1 | 2 | 3 | 4 | 5 | 6 | 7 | 8* | |
|---|---|---|---|---|---|---|---|---|---|
| Polyamid-12 | 100 | 100 | 100 | 100 | 100 | 100 | 100 | 100 | Teile |
| Polyolefin 1 | 0,25 | 0,50 | 1,0 | 2,0 | 2,0 | 5,0 | 10,0 | - | Teile |
| Mischtemperatur | RT | RT | RT | RT | 100 | RT | RT | - | °C |
| % abgefallenes Pulver während des Aufheizens | 5 | 0 | 0 | 0 | 0 | 0 | 0 | 90 | |

| | | | | | | | | | |
|---|---|---|---|---|---|---|---|---|---|
| * = unmodifiziertes Polyamid-Pulver | | | | | | | | | |

Die Mischungen, bzw. das unmodifizierte Polyamid-12 wurden elektrostatisch auf Prüfbleche bei Raumtemperatur aufgetragen. Es wurde darauf geachtet, daß die Beschichtung der Prüfbleche vollflächig und vollständig ist. Die Testspecimen wurden anschließend im Trockenschrank bei 210 °C für 7 min eingebrannt. Nach Abkühlen des Prüfbleches wurde die nicht beschichtete Fläche ermittelt und in Relation zur Gesamtfläche gesetzt. Die nicht beschichtete Fläche entspricht dem prozentualen Anteil des Pulvers, welches während der Aufheizphase seine elektrische Ladung abgibt und abfällt.

Das unmodifizierte Ausgangsprodukt, Polyamid-12, verliert während der Aufheizphase einen Großteil seiner Ladung. Daraus resultiert ein Lösen des Pulvers vom metallischen Untergrund und ca. 90 % des Prüfbleches sind unbeschichtet. Selbst bei geringen Zusätzen an polyolefinischem Wachs konnte eine erhebliche Verbesserung der Beschichtungsqualität, bzw. des elektrostatischem Verhaltens festgestellt werden. Bei Mischungen mit Anteilen Wachs > 5 % ist aber ein Haftungsverlust gegenüber dem Untergrund festzustellen.

Beispielhaft wurde bei der 5 % Mischung die Polyolefinkomponente ausgetauscht:

**Tabelle 2**

| Versuch | 1 | 2 | 3 | 4 | 5 | |
|---|---|---|---|---|---|---|
| Polyamid- 12 | 100 | 100 | 100 | 100 | 100 | Teile |
| Polyolefin 2 | - | 5 | - | - | - | Teile |
| Polyolefin 3 | - | - | 5 | - | - | Teile |
| Polyolefin 4 | - | - | - | 5 | - | Teile |
| Polyolefin 5 | - | - | - | - | 5 | Teile |
| Mischtemperatur | RT | RT | RT | RT | RT | °C |
| % abgefallenes Pulver während des Aufheizens | 90 | 0 | 0 | 0 | 0 | |

Polyolefin 2 ist ein Feinpulver basierend auf einem Standard Polyethylen-Wachs mit einem Schmelzpunkt von rund 120 °C. Polyolefin 3 ist ein Polybutylen mit einem Schmelzpunkt von rund 120 °C, welches vorab in die geforderte Partikelgröße vermahlen wurde. Polyolefin 4 ist ein Fischer-Tropsch-Wachs mit einem Schmelzpunkt von ca. 115 °C, und Polyolefin 5 ein oxidiertes Wachs mit einem Schmelzpunkt von ca. 110°C.

Auch hier konnte eine wesentliche Verbesserung des elektrostatischen Verhaltens beobachtet werden. Selbst höhermolekulare Polyolefine, wie Polyolefin 3 zeigen eine erhebliche Verbesserung des elektrostatischen Verhaltens. Ein Unterschied in der Beschichtungsqualität der einzelnen Mischungen konnte nicht festgestellt werden.

Analoge Versuche mit einem carboxylgruppen-geregelten Polyamid-12 mit vergleichbarer relativer Lösungsviskosität von 1,6, gemessen in m-Kresol, erbrachten vergleichbare Ergebnisse.

Die Polyamid/Polyolefin- Mischungen können natürlich nach Stand der Technik mit diversen Zusatzstoffen modifiziert werden, wie Verlaufsmittel, Füller, Pigmente, Antioxidatien etc. Beispielhaft wurde eine Mischung bestehend aus:

| | |
|---|---|
| Polyamid-12 | 100 Teile |
| Polyolefin 1 | 1,0 Teile |
| Flammruß | 2,0 Teile |
| Verlaufsmittel | 1,0 Teile |

im Dry-Blend-Verfahren hergestellt. Auch mit dieser Mischung konnte erfolgreich eine elektrostatische Beschichtung ohne Mängel hergestellt werden.

In einer weiteren Versuchsreihe wurde ein vermahlenes Polyamid mit Partikelgröße < 100 µm, ein carboxylgruppen geregeltes Polyamid-12 mit relativer Viskositat von ca. 1,6 mit Polyolefin 2 bei Temperaturen von 130 bis 150 °C hergestellt. Diese Temperaturen sind oberhalb des Schmelzpunktes des Polyolefin 2. Die Mischzeit betrug 30 min bis 120 min bei 1 000 U/min. Nach dem Abkühlen des Mischgutes auf Temperaturen < 100 °C wurde abgefüllt. Eine Agglomeration der einzelnen Partikel und eine wesentliche Verschiebung der Kornverteilung konnte nicht festgestellt werden. Die elektrostatischen Beschichtungsversuche waren ebenso erfolgreich. Ein Abfallen des Pulvers während der Aufheizphase konnte nicht festgestellt werden. Sämtliche Mischungen erzeugten einen vollflächigen Lackfilm. Auch hier liegt das Polyolefin als oberflächenwirksame Substanz vor und verhindert ein Abfallen des Pulvers vom metallischen Untergrund während der Aufheizphase.

Weiterhin wurde ein Polyamid-11 mit einer relativen Viskosität von ca. 1,4 mit 2,0 Teilen Polyolefin 2 bei Raumtemperatur abgemischt. Auch hier konnte kein Abfall des Pulvers vom metallischen Untergrund während des Aufheizvorganges festgestellt werden, während das Ausgangsprodukt das für Polyamide typische Verhalten der Entladung zeigen und es daher zu fehlerhaften Beschichtungen kommt.

Analoge Versuche mit Copolyamiden unterschiedlicher Zusammensetzung brachten die gleichen Resultate. Copolyamid 1 hat eine reduzierte Lösungsviskosität von 1,5, gemessen in m-Kresol, und einem Schmelzpunkt von rund 135 °C. Copolyamid 2 hat eine reduzierte Lösungsviskosität von 1,3 und einem Schmelzpunkt von rund 108 °C. Die Herstellung von Copolyamiden ist in der Literatur weitgehend beschrieben. Folgende Rohstoffe zur Herstellung dieser Produkte sollen beispielhaft erwähnt werden: Laurinlactam, Aminoundecansäure, Caprolactam, Adipinsäure, Hexamethylendiamin, Dodecandisäure, Azelainsäure, Sebazinsäure, Isophorondiamin, usw. Die eingesetzten Polyamide sollten eine relative Viskosität von 1,2 bis 1,8 aufweisen.

Bei den Mischungen im Dry-Blend-Verfahren liegt das Polyolefin als oberflächenwirksame Substanz vor und verbessert das elektrostatische Verhalten der Polyamidpulver. In den Extrusionsversuchen wurde bewiesen, daß eingemischte Polyolefine auch zur Verbesserung der Beschichtungsqualität beitragen. Beispielhaft wurden folgende Mischungen im Dry-Blend-Verfahren hergestellt, extrudiert und anschließend in die gewünschte Partikelgröße vermahlen. Durch den Extrusionsprozeß wird garantiert, daß das Polyolefin homogen in der Polyamidmatrix verteilt ist.

Die Extrusion erfolgte bei maximal 200 °C. Die Schneckengeometrie wurde so gewählt, daß zwei Mischzonen eine homogene Verteilung garantieren. Zusätzlich liegt die Extrusionstemperatur oberhalb der Schmelzpunkte der Einsatzstoffe. Die erkaltete Schmelze wurde anschließend granuliert und vermahlen. Um eine thermische Schädigung während der Extrusion zu verhindern, wurde ein sterisch gehindertes Phenolderivat als Stabilisator eingesetzt.

Als unmodifiziertes Variante wurde gemahlenes Polyamid-12 als Blindprobe eingesetzt.

**Tabelle 3**

| Versuch | 1 | 2 | 3 | 4 | 5 | 6 |
|---|---|---|---|---|---|---|
| Polyamid-12 | 100 | 100 | 100 | 100 | 100 | 100 |
| Polyolefin 2 | 1,0 | 2,0 | 5,0 | 10 | 15 | - |
| Stabilisator | 1,0 | 1,0 | 1,0 | 1,0 | 1,0 | - |
| % abgefallenes Pulver während des Aufheizens | 50 | 0 | 0 | 0 | 0 | 90 |

Die Pulver der Extrudate wurden elektrostatisch aufgetragen und wie oben beschrieben ausgetestet. Selbst geringe Zusätze an Polyolefln verbessern das elektostatische Verhalten des Polyamides. Das Polyolefin ist bei der Einarbeitung über die Extrusion in der Polyamidmatrix und liegt nur teilweise als oberflächenaktive Substanz vor.

Im Vergleich zum Dry-Blend-Verfahren muß bei der Extrusion mit erhöhten Anteilen an Polyolefin gearbeitet werden. Eine vollständiger Pulverlackfilm auf dem Prüfblech konnte beim Dry-Blend-Verfahren schon mit 0,5 % Additiv erreicht werden, während bei der Extrusion Gehalte > 1 % Additiv nötig sind. Beim Extrusionsverfahren wird das Polyolefin in einer Menge von 1 bis 10 Teilen, bezogen auf Polyamid und/oder Copolyamid, eingesetzt. Ein Haftungsverlust der Beschichtung ist ab etwa 15 % Polyolefinanteil festzustellen.

Obige Versuche zeigen, daß Polyolefine sich sehr gut eignen um Polyamid-Pulver so zu modifizieren, daß sie ohne Probleme als elektrostatischer Pulverlack zu verarbeiten sind. Zu beachten hierbei ist, daß das Polyolefin als oberflächenwirksame Substanz vorliegen muß. Daher wird beim Extrusionsverfahren mit einer erhöhten Menge Polyolefin gearbeitet.

## Patentansprüche

1. Elektrostatischer Pulverlack basierend auf Polyamiden und /oder Copolyamiden, dadurch gekennzeichnet,
daß der Pulverlack zusätzlich ein Polyolefin enthält.

2. Elektrostatischer Pulverlack nach Anspruch 1,
dadurch gekennzeichnet,
daß das verwendete Polyolefin ein Polyethylenwachs, ein Fischer-Tropsch-Wachs oder deren Oxidat, Polypropylen oder Polybutylen, allein oder in Kombination, ist.

3. Elektrostatischer Pulverlack nach einem der vorhergehenden Ansprüche,
dadurch gekennzeichnet,
daß das Polyolefin als oberflächenaktive Substanz vorliegt.

4. Elektrostatischer Pulverlack nach einem der vorhergehenden Ansprüche,
dadurch gekennzeichnet,
daß das verwendete Polyolefin einen Schmelzpunkt von 80 bis 170 °C besitzt.

5. Elektrostatischer Pulverlack nach einem der vorhergehenden Ansprüche,
dadurch gekennzeichnet,
das eingesetzte Polyamid ein Homopolyamid auf Basis Laurinlactam oder Aminoundecansäure oder ein Copolyamid mit einem Schmelzpunkt von > 100 °C ist.

6. Elektrostatischer Pulverlack nach einem der vorhergehenden Ansprüche,
dadurch gekennzeichnet,
daß das Polyamid eine relative Viskosität von 1,2 bis 1,8 besitzt.

7. Elektrostatischer Pulverlack nach einem der vorhergehenden Ansprüche,
dadurch gekennzeichnet,
daß das Polyolefin im Dry-Blend-Verfahren auf das Polyamidkorn aufgebracht wird.

8. Elektrostatischer Pulverlack nach Anspruch 7,
dadurch gekennzeichnet,
daß das Polyolefin in einer Menge von 0,5 bis 5 Teilen, bezogen auf Polyamid und/oder Copolyamid, eingesetzt wird.

9. Elektrostatischer Pulverlack nach einem der Ansprüche 1 bis 6,
dadurch gekennzeichnet,
daß das Polyolefin im Extrusionsverfahren in das Polyamid gebracht wird und anschließend nach der Vermahlung als oberflächenaktive Substanz vorliegt.

10. Elektrostatischer Pulverlack nach Anspruch 9,
dadurch gekennzeichnet,
daß das Polyolefin in einer Menge von 1 bis 10 Teilen, bezogen auf Polyamid und/oder Copolyamid, eingesetzt wird.
